Europäisches Patentamt

European Patent Office

Office européen des brevets

(19)

(11) **EP 0 516 201 B1**

(12) **EUROPEAN PATENT SPECIFICATION**

(45) Date of publication and mention
of the grant of the patent:
**27.12.1996  Bulletin 1996/52**

(51) Int Cl.6: **C08F 218/10**, C08F 218/08

(21) Application number: **92201174.7**

(22) Date of filing: **27.04.1992**

(54) **Polymer latices from vinyl acetate and vinyl esters of branched chain carboxylic acids**

Polymer Latice von Vinyl Acetat und Vinylestern von verzweigter Karboxylsäure

Latices de polymères d'acetate de vinyle et d'esters vinyliques d'acides carboxyliques ramifiés

(84) Designated Contracting States:
**BE CH DE ES FR GB IT LI NL PT SE**

(30) Priority: **02.05.1991  GB 9109487**

(43) Date of publication of application:
**02.12.1992  Bulletin 1992/49**

(73) Proprietor: **SHELL INTERNATIONALE
RESEARCH MAATSCHAPPIJ B.V.
2596 HR Den Haag (NL)**

(72) Inventors:
 • **Coppin, Linda Louise-Marie Guillaume
   B-1348 Ottignies Louvain-La-Neuve (BE)**
 • **Slinckx, Martine Madeleine Christiane Pierre
   B-1348 Ottignies Louvain-La-Neuve (BE)**
 • **Scholten, Henricus Paulus Hubertus
   B-1348 Ottignies Louvain-La-Neuve (BE)**

(56) References cited:
**EP-A- 0 315 278          FR-A- 1 490 013**

Remarks:
The file contains technical information submitted after the application was filed and not included in this specification

## Description

This invention relates to polymers from vinyl acetate and vinyl esters of branched chain carboxylic acids, to latices containing such polymers, to the preparation of such polymers, by means of emulsion polymerisation using a stabilising comonomer, to coating compositions comprising such latices and to solid polymeric products, for example redispersible latex powders formed by drying of such latices.

Vinyl esters of branched carboxylic acids are manufactured and sold by for instance the applicant company (Shell) under the trademark "VeoVa". From the VeoVa Technical Manual VM 2.1, Technical Bulletin issued June 1988 and VM 3.2, Technical Bulletin issued December 1988, polymers are known, obtainable by emulsion polymerisation in the presence of a copolymerisable functional monomer of a starting comonomer mixture comprising vinyl acetate and a vinyl ester of a branched chain carboxylic acid containing 9 carbon atoms in the chain ("VeoVa 9"), and/or such a vinyl ester containing 10 carbon atoms in the chain ("VeoVa 10") ("VeoVa" is a Trade Mark). Colloid-free latices prepared from these polymers have a number of excellent properties such as: ease of manufacturing; good film formation; high outdoor durability; good alkali resistance; good pigment binding power; and permanent flexibility. Such polymers are accordingly widely used in the indoor and outdoor emulsion paint market.

EP-A-315278 discloses the polymerization product of a composition of vinyl acetate, the vinyl ester of branched chain carboxylic acids, a copolymerisable monomer such as acrylic acid and one or more esters of acrylic or alkylacrylic acid. The ester groups of the latter compounds are saturated. In an example a combination of i.a. "VeoVa 10" , "VeoVa 9" and vinyl acetate has been used.

For certain types of emulsion paint, e.g. glossy paints and woodstains, an improved level of water resistance is required together with a block resistant film. It was found that polymers from vinyl acetate and VeoVa 10 in conjunction with VeoVa 9 proved a satisfactory solution. Nevertheless, there remained a demand for polymers resulting in a film of at least similar hardness, with a further improved level of water resistance, and -due to environmental considerations- enhanced degree of conversion (lesser amount of unreacted monomers).

As a result of extensive research and experimentation there were surprisingly found such polymer compositions aimed at, showing a very attractive combination of properties, such as high monomer conversion and the chemical stability, alkali resistance, light resistance, water absorption and water spot of the latex film.

Accordingly a group of polymers is provided characterised in that they are obtainable by emulsion polymerization of a starting comonomer mixture comprising:

(I) vinyl pivalate;
(II) vinyl ester of a tertiary aliphatic carboxylic acid in which the acid moieties contain 10 carbon atoms;
(III) vinyl acetate;
(IV) a stabilising monomer, selected from the group comprising acrylic acid, methacrylic acid, acrylamide, methacrylamide, diacetone acrylamide and sodium vinyl sulphonate and mixtures thereof, of which acrylic acid or methacrylic acid are the most preferred, in an amount of from 0.5 to 5% by weight, relative to the total weight of monomers, wherein the respective weight percentages of the components (I), (II) and (III) being calculated relative to the total weight of the sum of the amounts of said components, are simultaneously fulfilling the following equations, each describing compositions having equal performance contour lines in a triangle diagram:

(i)

$$T_g = 73\,x_1 - 2\,x_2 + 40\,x_3 - 6\,x_1.x_2 - 14\,x_1.x_3$$

$$- 12\,x_2.x_3 + 15\,x_1.x_2.x_3$$

(ii)

$$WA = 9.9\,x_1 + 19.2\,x_2 + 111.2\,x_3 + 12.6\,x_1.x_2 -$$

$$182.6\,x_1.x_3 + 0.4\,x_2.x_3 + 191.1\,x_1.x_2.x_3$$

(iii)

$$WSR = 10\,x_1 + 5\,x_2 - 6\,x_1.x_2 + 20\,x_1.x_3 + 6\,x_2.x_3$$

$$+ 21\, x_1 . x_2 . x_3,$$

wherein $T_g$ represents the glass transition temperature having a value in the range of from 0 °C to 50 °C, wherein WA represents the water absorption value being at most 60% m/m measured as specified hereinafter, wherein WSR represents the water spot value being at least 5, after 24 hours as specified hereinafter, wherein $x_1$ represents the weight percentage of component (I), $x_2$ represents the weight percentage of component (II), having at least a value of 0.5 %wt and wherein $x_3$ represents the weight percentage of component (III), having at least a value of 0.5 %wt, the values of $x_1$, $x_2$ and $x_3$ being calculated on the total weight of the components (I), (II) and (III).

Co-pending application 92201173.9 (EP-A-513889) relates to polymers obtainable by polymerizing specific amounts of components (I), (II) and (III) in the presence of a colloid stabilizer.

According to a preferred embodiment of the present invention, polymers are provided, which are derivable from the components (I)-(IV), wherein the component (IV) consists of acrylic acid in an amount of 0.5-2% by weight and preferably 1% by weight.

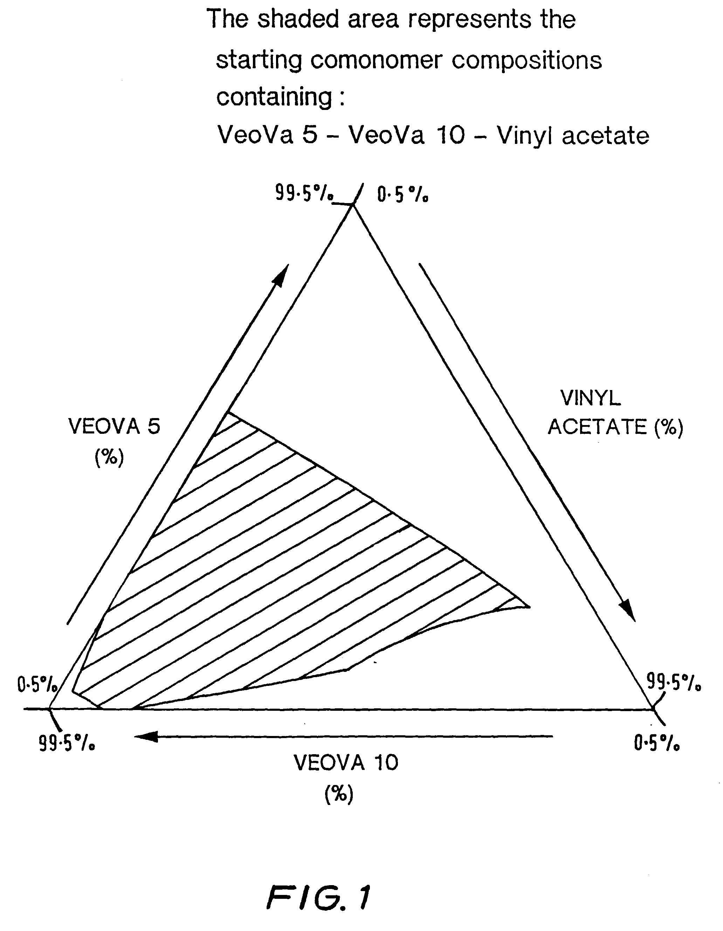

The starting comonomer compositions containing monomer (I), (II) and (III) in proportions meeting the equations (i)-(iii), are represented by the shaded area in figure 1.

It was found that such figure was not significantly changed when instead of the applied acrylic acid another of the above specified stabilising monomer was used in the same percentage by weight.

It will be appreciated that the starting comonomers vinyl pivalate and the vinyl ester of the $C_{10}$ carboxylic acid are produced initially from a technical mixture of starting olefins. Therefore the starting main component (II) to be applied for latices according to the present invention is composed of several isomers and are accompanied by minor amounts (< 5%) of homologues. The starting main component (I) consists of only one isomeric constituent which is accompanied by minor amounts (<5%) of homologues. However, said minor amounts of accompanying or homologues compounds were found not to interfere with the copolymerisation process according to the present invention.

As component (I) preferably VeoVa 5 and as component (II) preferably VeoVa 10 is used.

A more preferred group of polymers are derivable from comonomer mixtures, wherein the weight fractions $x_1$, $x_2$ and $x_3$ of these components (I), (II) and (III) simultaneously fulfil the equations (i) to (iii), wherein now $T_g$ has a value in the range from 10 °C to 30 °C, WA has a value of at most 50%, WSR has a value of at least 6 after 24 hours when applied in coating films, and wherein component (IV) is 1% acrylic acid by weight.

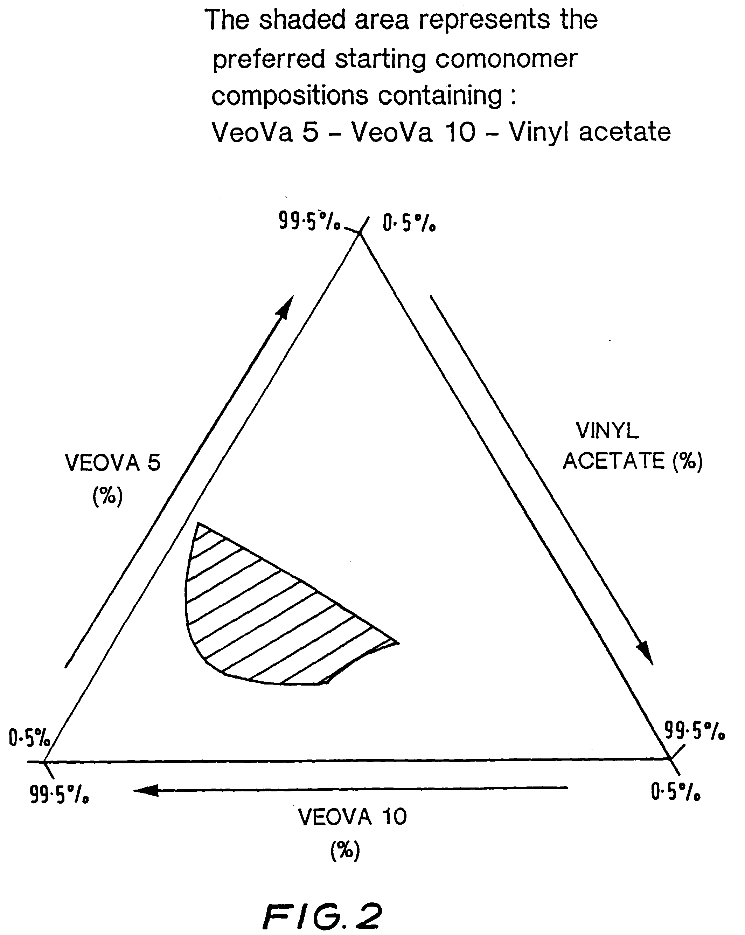

These preferred starting monomer compositions containing monomers (I), (II) and (III) in the suitable proportions meeting the aforementioned preferred requirements are represented by the shaded area in figure 2.

In cases of application of another stabilising monomer instead of acrylic acid in the same amount this area representing optimal comonomer compositions was found to be changed only in a minor degree.

One of the most preferred embodiments of the polymers of the present invention is formed by those, characterised in that they are derivable from a starting comonomer mixture comprising:

(I)       14% ≤ vinyl pivalate (VeoVa 5) ≤ 45%;
(II)      32% ≤ vinyl ester of a tertiary aliphatic carboxylic acid in which the acid moiety contains 10 carbon atoms (VeoVa 10) ≤ 65%;
(III)      2% ≤ vinyl acetate ≤ 47%;

said weight percentages being calculated relative to the total weight of comonomers (I)-(III) and the respective percentages forming together 100%.

It has been found that by the use of only one copolymerisable stabilising component (IV) in the above specified relatively low amount, latices could be obtained showing an acceptable low free monomer content, i.e. < 1% m/m based on the solid content, and a good stability during further processing and storage.

The present invention also relates to latices, containing as polymeric constituent 30-60% by weight of an polymer as described above and more preferably those wherein the polymeric constituent amounts from 40-50% by weight, to coating compositions comprising a latex and preferably at least one pigment, and to solid polymeric products formed by physical drying of such latices or coatings and to redispersible latex powders formed by physical drying of such latices and to coating compositions derived from such powders.

A further aspect of the present invention relates to a process for the preparation of latices containing the above specified polymers.

It was found in addition that these attractive results could be reached by effecting thermal initiation as well as redox initiation of the starting reaction mixture, being rather independent on the actual relative proportions of the components (I)-(IV) in the indicated ranges. More preferably thermal initiation of the reaction mixture is applied.

The polymers containing latices according to the present invention may be prepared under conditions which are known in the art and generally involve a temperature of 20-100 °C. More particularly the preparation process is carried out in a temperature range of from 60-100 °C, when thermal initiation is employed and preferably 75-85 °C. Accordingly, the present invention provides a process for the preparation of latices, containing the above polymers by polymerization of the comonomer mixtures at a temperature in the range of from 60 to 100 °C and preferably in the range of from 75-85 °C in the presence of additional stabilisers one or more radical initiators and buffering agents.

In the reaction mixture additional stabilisers, optionally to be copolymerised, one or more radical initiators and buffering agents are to be included.

Stabilisers suitably constitute 2-8% by weight, calculated relative to the total weight of the monomer constituents. Suitable stabilisers and the amount they are used in are well-known in the art and described in for instance the aforementioned Technical Manual, EP-A-295727, and in Emulsifiers and detergents, international edition, volume 1 (by Mc Cutcheon, The Manufacturing Confectioner Publishing Co., Glen Rock NY, USA 1990). Preferably an anionic and a non-ionic surface active agent are used. Especially preferred is the use of an alkylaryl sulphonate together with an ethoxylated nonylphenol (e.g., "Arkopol N230", a trademark).

Likewise suitable free radical initiators, radical formation accelerators, buffering agents and their relative amounts are also well-known in the art and disclosed in the above cited Technical Manual and European patent application.

According to a preferred embodiment of the process of the present invention, thermal initiation is applied and, if desired, the reaction is carried out in an inert atmosphere such as nitrogen to flush out the reaction vessel prior to starting the reaction.

According to a further preferred embodiment of the process of the present invention, an emulsion premix is prepared in demineralised water from a part of one or more surface active agents, a part of one or more radical initiators, a buffer and comonomers (I), (II), (III) and (IV). If desired, the reactor is flushed with nitrogen and filled with about an equal amount of demineralised water, and the remaining amounts of the surface active agent(s) and initiator.

The reactor is heated to a temperature in the specified range, e.g. 80 °C, the nitrogen stream is stopped and the emulsion premix addition is started. The addition is normally extended over a period of from 2 to 5 hours during which the originally adjusted temperature is maintained. A post polymerisation period of from 1 to 3 hours is normally used at a temperature of e.g. 80 °C.

After this post polymerisation, the latex obtained is cooled and if necessary filtered.

The generally obtained latices have a total solids content in the range of from 30-60% by weight of the latex and preferably from 45-55% and a weight average particle diameter in the range of from 90-170 nm depending on the surfactant repartition between the emulsion premix and the initial reactor charge.

A further aspect of the present invention relates to a latex produced by the process described above, and the polymer which forms on physical drying of such a latex, for example to form a coating on a substrate or a powder intended for reconstitution as a latex or use in a concrete or other latex based end product.

Latices in accordance with the invention may find application in concretes, lacquers, paints, wood coatings, anti-corrosion paints and textured coatings. They are of particular interest for composing lacquers and paints due to their good film forming properties, their water resistance, their high pigment binding power, flexibility, the lack of tackiness of the films, their alkali resistance and resistance to ultra violet light. Paints containing the latices of the invention contain pigments, and will commonly contain further constituents, examples being fillers, co-solvents, thickeners, dispersants, preservatives, corrosion inhibitors, and anti foaming agents.

It will be appreciated therefore that coating compositions, comprising the latices according to the present invention and solid polymer product formed thereof, also form an aspect of the present invention.

The invention will now be further described with reference to the following examples.

Examples

Into a one-litre reaction flask, provided with a central and four peripheral glass openings fitted with a reflux condenser, stirrer, thermometer, nitrogen inlet tube and emulsion premix tube, an initial reactor charge was introduced and the temperature was increased to 80 °C. The initial reactor charge was composed of:

| | |
|---|---|
| water, demineralised | 119.00 g |
| Humifen SF 90 (trademark) 10% aqueous solution | 1.30 g |
| Arkopal N 230 (trademark) 25% solution | 5.00 g |
| potassium persulphate | 0.25 g |

A comonomer pre-emulsion was prepared by addition of the comonomer mixture in each run comprising 250 g VeoVa 5 + VeoVa 10 + vinyl acetate as specified in table 1 hereinafter and 2.5 g of acrylic acid to the agitated aqueous phase composed of:

| water, demineralised | 149.00 g |
| Humifen SF 90,10% aqueous solution | 23.70 g |
| Arkopal N 230, 25% aqueous solution | 25.00 g |
| potassium persulphate | 1.00 g |
| potassium carbonate | 1.00 g |

As soon as the temperature of the initial charge reached 80 °C, the addition of the monomer pre-emulsion took place according to the schedule:

| initial addition rate expressed as % of full addition rate (100) | 25 |

After

| 20 min increase addition rate to | 50 |
| 40 min | 75 |
| 60 min | 100 |

The pre-emulsion addition lasted 2.5 hours. The maximum addition rate was reached after 1 hour. When the addition was complete, the reaction temperature was maintained at 80 °C for a digestion period of 2 hours. The latex was cooled and filtered.

Comparative experiments, wherein VeoVa 9 was applied instead of a specific concentration of VeoVa 5 in the same concentration under the same further conditions, always in the presence of VeoVa 10, are listed in table 2. It is observed that except for the water spot resistance the examples in accordance with the invention showed better results than the comparative examples.

TABLE 1

| Colloid-free latex references | I | II | III | IV | V | VI |
|---|---|---|---|---|---|---|
| Monomer composition (weight %) | | | | | | |
| VeoVa 5 | 16.0 | 16.5 | 26.0 | 34.0 | 28.0 | 30.0 |
| VeoVa 10 | 41.5 | 66.0 | 56.0 | 55.0 | 50.0 | 45.0 |
| Vinyl acetate | 41.5 | 16.5 | 16.0 | 10.0 | 20.0 | 24.0 |
| Acrylic acid | 1.0 | 1.0 | 2.0 | | | |
| Methacrylic acid | | | | | 2.0 | |
| Acrylamide | | | | | | 1.0 |
| Sodium vinyl sulphonate | | | | 1.0 | | |
| Latex properties | | | | | | |
| Conversion (% on monomer intake) | 99.3 | 99.2 | 99.3 | 99.2 | 99.2 | 99.5 |
| Solid content in % | 45.2 | 45.1 | 45.7 | 44.6 | 44.5 | 45.5 |
| Minimum film forming temperature (deg. C) | 13 | 8 | 19 | 17 | 20 | 23 |
| Particle size (nm) | 116 | 146 | 138 | 157 | 152 | 126 |
| Viscosity (mPa.s) | 30 | 30 | 40 | 20 | 25 | 50 |
| Polymer properties | | | | | | |
| $T_g$ (deg. C) measured by D.S.C. | 24 | 12 | 25 | 25 | 27 | 30 |
| Water spot resistance (24 H exposure) | 6 | 6 | 8 | 6 | 6 | 8 |
| Water absorp. in % (thick film - 14 days) | 48.8 | 22.0 | 19.5 | 33.6 | 48.5 | 49.8 |

## TABLE 2

COMPARISON VeoVa 9 - VeoVa 5 (Colloid-free latices)

| | LATEX 1 (VV9) | LATEX 1' (VV5) | LATEX 2 (VV9) | LATEX 2' (VV5) | LATEX 3 (VV9) | LATEX 3' (VV5) |
|---|---|---|---|---|---|---|
| Monomer Composition | | | | | | |
| Vinyl acetate | 50.0 | 50.0 | 40.0 | 40.0 | 30.0 | 30.0 |
| VeoVa 10 | 32.5 | 32.5 | 37.0 | 37.0 | 40.0 | 40.0 |
| VeoVa 9 | 17.5 | | 23.0 | | 30.0 | |
| VeoVa 5 | | 17.5 | | 23.0 | | 30.0 |
| Properties | | | | | | |
| Solid content (% m/m) | 50.6 | 50.5 | 50.6 | 49.3 | 50.6 | 50.4 |
| Monomer conversion (% m/m) | 99.2 | 99.6 | 99.2 | 99.5 | 99.0 | 99.6 |
| PS (nm) | 144 | 174 | 149 | 155 | 168 | 163 |
| Viscosity (mPa.s) | 150 | 100 | 150 | 120 | 120 | 120 |
| MFT (deg. C) | 13 | 17 | 15 | 18 | 15 | 21 |
| $T_g$ (deg. C) measured by D.S.C. | 23 | 27 | 19 | 28 | 20 | 22 |
| Water absorption (% m/m) (24 H immersion - thin film) | 63.5 | 44.8 | 57.3 | 37.7 | 29.2 | 17.8 |
| Water spot resistance     1 H | 10 | 9 | 10 | 8 | 10 | 7 |
| 24 H | 5 | 5 | 5 | 5 | 6 | 6 |

Standard conditions: 1% Acrylic acid; 1% Humifen SF90; 3% Arkopal N230; 035% K2CO3

EP 0 516 201 B1

<u>Test methods</u>

The water absorption of latex polymer films (Thick film test method) was measured as described hereinafter.

A wet film of 2 mm thickness is applied on a polyethylene foil (the latex is kept on the foil by applying an automotive sealer on the edges of the foil). To avoid a too fast evaporation of water and as a result severe mud-cracking the panels are covered with some water vapour transmitting material and then stored at 20 °C above the Tg for a week. The cover is removed after clear films are formed. Three pieces of 2 x 2 cm are cut from the film after removal from the glass panel and weighed to the nearest 0.1 mg. These are stored in demineralised water at 23 °C and reweighed after 14 days (after removal of the excess of water by filter paper). The water absorption is calculated from the observed weight increase. The result of the triplicate measurements are averaged.

The water spot resistance of latex polymer films was measured as described hereinafter.

A wet latex film of 200 $\mu$m (micron) is applied on a glass panel and allowed to dry for a week at 20 °C above the $T_g$. When cooled to 23 °C a drop of water is brought on the film and the panel is placed on a dark underground. After 24 hrs the whitening effect is visually judged. A rating between 10 (film is unaffected) and 0 (film is completely white) is given. After one hour the four scores are added and divided by four (max. score 40). If the film scores very high it is worthwhile to continue the test for another 23 hours and to give a 24 hours rating between 0 and 10. In order to avoid evaporation of the water droplet, it can be covered overnight by a watch glass.

**Claims**

**Claims for the following Contracting States : BE, CH, LI, DE, FR, GB, IT, NL, PT, SE**

1. Polymers obtainable by emulsion polymerisation of a starting comonomer mixture, comprising

    (I) vinyl pivalate;
    (II) vinyl ester of a tertiary aliphatic carboxylic acid in which the acid moieties contain 10 carbon atoms;
    (III) vinyl acetate;
    (IV) a stabilising monomer, selected from the group comprising acrylic acid, methacrylic acid, acrylamide, methacrylamide, diacetone acrylamide and sodium vinyl sulphonate and mixtures thereof, in an amount of from 0.5 to 5% by weight relative to the total weight of monomers, wherein the respective percentage of the components (I), (II) and (III) being calculated relative to the total weight of the sum of the amount of said components, are simultaneously fulfilling the following equations, each describing compositions having equal performance contour lines in a triangle diagram:

    (i)

    $$T_g = 73\, x_1 - 2\, x_2 + 40\, x_3 - 6\, x_1.x_2 - 14\, x_1.x_3$$
    $$- 12\, x_2.x_3 + 15\, x_1.x_2.x_3$$

    (ii)

    $$WA = 9.9\, x_1 + 19.2\, x_2 + 111.2\, x_3 + 12.6\, x_1.x_2$$
    $$- 182.6\, x_1.x_3 + 0.4\, x_2.x_3 + 191.1\, x_1.x_2.x_3$$

    (iii)

    $$WSR = 10\, x_1 + 5\, x_2 - 6\, x_1.x_2 + 20\, x_1.x_3 + 6\, x_2.x_3$$
    $$+ 21\, x_1.x_2.x_3$$

    wherein $T_g$ represents the glass transition temperature having a value in the range of from 0 °C to 50 °C, wherein WA represents the water absorption value being at most 60% m/m, wherein WSR represents the water spot value being at least 5 after 24 hours, wherein $x_1$ represents the weight percentage of component (I), $x_2$ represents the weight percentage of component (II), having at least a value of 0.5 %wt and wherein $x_3$ represents the weight percentage of component (III), having at least a value of 0.5 %wt, the values of $x_1$, $x_2$ and $x_3$ being calculated on the total weight of the components (I), (II) and (III).

2. Polymers according to claim 1, characterised in that they are derivable from comonomer mixtures, wherein the weight fractions of these components (I), (II) and (III) simultaneously fulfil the equations (i) to (iii), wherein $T_g$ has a value in the range from 10 °C to 30 °C, WA has a value of at most 50%, WSR has a value of at least 6 after 24 hours when applied in coating films, and wherein component (IV) is 1% acrylic acid by weight.

3. Polymers according to claims 1 or 2 characterised in that they are derivable from a starting mixture comprising from 14% to 45% vinyl pivalate, from 32% to 65% vinyl ester of a tertiary aliphatic carboxylic acid in which the acid moiety has 10 carbon atoms, and from 2% to 47% vinyl acetate, the weight percentages being calculated relative to the total weight of comonomers (I)-(III) and the respective percentages forming together 100%.

4. A latex containing as polymeric constituent 30-60% by weight of an polymer according to anyone of claims 1 to 3.

5. Coating compositions comprising a latex according to claim 4 and at least one pigment.

6. A solid polymeric product formed by physical drying of a latex according to claim 4.

7. A process for the preparation of latices, containing the polymers according to anyone of claims 1 to 3, by polymerisation of the comonomer mixtures at a temperature in the range of from 60 to 100 °C in the presence of additional stabilisers one or more radical initiators and buffering agents.

8. A process according to claim 7, in which the polymerization is carried out at a temperature in the range of from 75 to 85 °C.

**Claims for the following Contracting State : ES**

1. Emulsion polymerisation of a starting comonomer mixture, comprising

(I) vinyl pivalate;
(II) vinyl ester of a tertiary aliphatic carboxylic acid in which the acid moieties contain 10 carbon atoms; (III) vinyl acetate;
(IV) a stabilising monomer, selected from the group comprising acrylic acid, methacrylic acid, acrylamide, methacrylamide, diacetone acrylamide and sodium vinyl sulphonate and mixtures thereof, in an amount of from 0.5 to 5% by weight relative to the total weight of monomers, wherein the respective percentage of the components (I), (II) and (III) being calculated relative to the total weight of the sum of the amount of said components, are simultaneously fulfilling the following equations, each describing compositions having equal performance contour lines in a triangle diagram:

(i)

$$T_g = 73\,x_1 - 2\,x_2 + 40\,x_3 - 6\,x_1.x_2 - 14\,x_1.x_3$$

$$- 12\,x_2.x_3 + 15\,x_1.x_2.x_3$$

(ii)

$$WA = 9.9\,x_1 + 19.2\,x_2 + 111.2\,x_3 + 12.6\,x_1.x_2$$

$$- 182.6\,x_1.x_3 + 0.4\,x_2.x_3 + 191.1\,x_1.x_2.x_3$$

(iii)

$$WSR = 10\,x_1 + 5\,x_2 - 6\,x_1.x_2 + 20\,x_1.x_3 +$$

$$6\,x_2.x_3 + 21\,x_1.x_2.x_3$$

wherein $T_g$ represents the glass transition temperature having a value in the range of from 0 °C to 50 °C, wherein WA represents the water absorption value being at most 60% m/m, wherein WSR represents the water spot value being at least 5 after 24 hours, wherein $x_1$ represents the weight percentage of component (I), $x_2$ represents the weight percentage of component (II), having at least a value of 0.5 %wt and wherein $x_3$ represents the weight percentage of component (III), having at least a value of 0.5 %wt, the values of $x_1$, $x_2$ and $x_3$ being calculated on the total weight of the components (I), (II) and (III).

2. Emulsion polymerisation according to claim 1, characterised in that the polymerisation uses starting comonomer mixtures, wherein the weight fractions of these components (I), (II) and (III) simultaneously fulfil the equations (i) to (iii), wherein $T_g$ has a value in the range from 10 °C to 30 °C, WA has a value of at most 50%, WSR has a value of at least 6 after 24 hours when applied in coating films, and wherein component (IV) is 1% acrylic acid by weight.

3. Emulsion polymerisation according to claims 1 or 2 characterised in that the polymerisation uses a starting mixture comprising from 14% to 45% vinyl pivalate, from 32% to 65% vinyl ester of a tertiary aliphatic carboxylic acid in which the acid moiety has 10 carbon atoms, and from 2% to 47% vinyl acetate, the weight percentages being calculated relative to the total weight of comonomers (I)-(III) and the respective percentages forming together 100%.

4. A process for the preparation of latices, containing the polymers prepared according to anyone of claims 1 to 3, by polymerisation of the comonomer mixtures at a temperature in the range of from 60 to 100 °C in the presence of additional stabilisers one or more radical initiators and buffering agents.

5. A process according to claim 4, in which the polymerization is carried out at a temperature in the range of from 75 to 85 °C.

**Patentansprüche**

**Patentansprüche für folgende Vertragsstaaten : BE, CH, LI, DE, FR, GB, IT, NL, PT, SE**

1. Polymerisate, erhältlich durch Emulsionspolymerisation einer Ausgangscomonomermischung aus:

   (I) Vinylpivalat;
   (II) Vinylester einer tertiären aliphatischen Carbonsäure, in der die Säurereste 10 Kohlenstoffatome enthalten;
   (III) Vinylacetat;
   (IV) einem stabilisierend wirkenden Monomer, ausgewählt aus der Gruppe, bestehend aus Acrylsäure, Methacrylsäure, Acrylamid, Methacrylamid, Diacetonacrylamid und Natriumvinylsulfonat sowie deren Mischungen, in einer Menge von 0,5 bis 5 Gew.-%, bezogen auf das Gesamtgewicht der Monomere, wobei die jeweiligen Anteile der Komponenten (I), (II) und (III), bezogen auf das Gesamtgewicht der Summe der Mengen dieser Komponenten berechnet, gleichzeitig die folgenden, jeweils Zusammensetzungen gleicher Leistungskonturlinien in einem Dreiecksdiagramm beschreibenden Gleichungen erfüllen:

   (i)

   $$T_g = 73\,x_1 - 2\,x_2 + 40\,x_3 - 6\,x_1.x_2 - 14$$

   $$x_1.x_3 - 12\,x_2.x_3 + 15\,x_1.x_2.x_3$$

   (ii)

$$WA = 9{,}9\,x_1 + 19{,}2\,x_2 + 111{,}2\,x_3 + 12{,}6$$

$$x_1.x_2 - 182{,}6\,x_1.x_3 + 0{,}4\,x_2.x_3 +$$

$$191{,}1\,x_1.x_2.x_3$$

(iii)

$$WFB = 10\,x_1 + 5\,x_2 - 6\,x_1.x_2 + 20\,x_1.x_3 + 6$$

$$x_2.x_3 + 21\,x_1.x_2.x_3,$$

wobei $T_g$ die Glasübergangstemperatur mit einem Wert im Bereich von 0°C bis 50°C; WA den Wasseraufnahmewert von höchstens 60 Masse-%, WFB den Wasserfleckwert, der nach 24 Stunden mindestens 5 beträgt; $x_1$ den Gewichtsanteil der Komponente (I); $x_2$ den Gewichtsanteil der Komponente (II) mit einem Wert von mindestens 0,5 Gew.-%; und $x_3$ den Gewichtsanteil der Komponente (III) mit einem Wert von mindestens 0,5 Gew.-% bedeuten, wobei die Werte von $x_1$, $x_2$ und $x_3$ auf das Gesamtgewicht der Komponenten (I), (II) und (III) bezogen berechnet sind.

2. Polymerisate nach Anspruch 1, dadurch gekennzeichnet, daß sie sich aus Comonomermischungen ableiten lassen, bei denen die Gewichtsanteile der Komponenten (I), (II) und (III) gleichzeitig die Gleichungen (i) bis (iii) erfüllen, wobei $T_g$ einen Wert im Bereich von 10°C bis 30°C, WA einen Wert von höchstens 50%, WFB bei Einsatz in Beschichtungsfilmen nach 24 Stunden einen Wert von mindestens 6 hat und es sich bei der Komponente (IV) um 1 Gew.-% Acrylsäure handelt.

3. Polymerisate nach Anspruch 1 oder 2, dadurch gekennzeichnet, daß sie sich aus einer Ausgangsmischung aus 14 bis 45 % Vinylpivalat, 32 bis 65 % Vinylester einer tertiären aliphatischen Carbonsäure, in der der Säurerest 10 Kohlenstoffatome aufweist, und 2 bis 47 % Vinylacetat, wobei die Gewichtsanteile bezogen auf das Gesamtgewicht der Comonomere (I)-(III) berechnet sind und zusammen 100% ergeben, ableiten lassen.

4. Latex, der als polymeren Bestandteil 30 - 60 Gew.-% eines Polymerisats nach einem der Ansprüche 1 bis 3 enthält.

5. Beschichtungszusammensetzungen, enthaltend einen Latex nach Anspruch 4 und mindestens ein Pigment.

6. Festes, polymeres Produkt, gebildet durch physikalisches Trocknen eines Latex nach Anspruch 4.

7. Verfahren zur Herstellung von Latices, die die Polymerisate nach einem der Ansprüche 1 bis 3 enthalten, durch Polymerisation der Comonomermischungen bei einer Temperatur im Bereich von 60 bis 100°C in Gegenwart von zusätzlichen Stabilisatoren sowie einem oder mehreren radikalischen Initiatoren und einer oder mehreren Puffersubstanzen.

8. Verfahren nach Anspruch 7, bei dem man die Polymerisation bei einer Temperatur im Bereich von 75 bis 85°C durchführt.

**Patentansprüche für folgenden Vertragsstaat : ES**

1. Emulsionspolymerisation einer Ausgangscomonomermischung aus:

(I) Vinylpivalat;
(II) Vinylester einer tertiären aliphatischen Carbonsäure, in der die Säurereste 10 Kohlenstoffatome enthalten;
(III) Vinylacetat;
(IV) einem stabilisierend wirkenden Monomer, ausgewählt aus der Gruppe, bestehend aus Acrylsäure, Methacrylsäure, Acrylamid, Methacrylamid, Diacetonacrylamid und Natriumvinylsulfonat sowie deren Mischungen, in einer Menge von 0,5 bis 5 Gew.-%, bezogen auf das Gesamtgewicht der Monomere, wobei die jeweiligen Anteile der Komponenten (I), (II) und (III), bezogen auf das Gesamtgewicht der Summe der Mengen dieser Komponenten berechnet, gleichzeitig die folgenden, jeweils Zusammensetzungen gleicher Leistungkonturlinien in einem Dreiecksdiagramm beschreibenden Gleichungen erfüllen:

(i)

$$T_g = 73\,x_1 - 2\,x_2 + 40\,x_3 - 6\,x_1.x_2 - 14$$

$$x_1.x_3 - 12\,x_2.x_3 + 15\,x_1.x_2.x_3$$

(ii)

$$WA = 9,9\,x_1 + 19,2\,x_2 + 111,2\,x_3 + 12,6$$

$$x_1.x_2 - 182,6\,x_1.x_3 + 0,4\,x_2.x_3 +$$

$$191,1\,x_1.x_2.x_3$$

(iii)

$$WFB = 10\,x_1 + 5\,x_2 - 6\,x_1.x_2 + 20\,x_1.x_3 + 6$$

$$x_2.x_3 + 21\,x_1.x_2.x_3,$$

wobei $T_g$ die Glasübergangstemperatur mit einem Wert im Bereich von 0°C bis 50°C; WA den Wasseraufnahmewert von höchstens 60 Masse-%, WFB den Wasserfleckwert, der nach 24 Stunden mindestens 5 beträgt; $x_1$ den Gewichtsanteil der Komponente (I); $x_2$ den Gewichtsanteil der Komponente (II) mit einem Wert von mindestens 0,5 Gew.-%; und $x_3$ den Gewichtsanteil der Komponente (III) mit einem Wert von mindestens 0.5 Gew.-% bedeuten, wobei die jeweiligen Werte von $x_1$, $x_2$ und $x_3$ auf das Gesamtgewicht der Komponenten (I), (II) und (III) bezogen berechnet sind.

2. Emulsionspolymerisation nach Anspruch 1, dadurch gekennzeichnet, daß die Gewichtsanteile der Komponenten (I), (II) und (III) gleichzeitig die Gleichungen (i) bis (iii) erfüllen, wobei $T_g$ einen Wert im Bereich von 10°C bis 30°C, WA einen Wert von höchstens 50%, WFB bei Einsatz in Beschichtungsfilmen nach 24 Stunden einen Wert von mindestens 6 hat und es sich bei der Komponente (IV) um 1 Gew.-% Acrylsäure handelt.

3. Emulsionspolymerisation nach Anspruch 1 oder 2, dadurch gekennzeichnet, daß die Ausgangsmischung 14 bis 45 % Vinylpivalat, 32 bis 65 % Vinylester einer tertiären aliphatischen Carbonsäure, in der der Säurerest 10 Kohlenstoffatome aufweist, und 2 bis 47 % Vinylacetat, wobei die Gewichtsanteile bezogen auf das Gesamtgewicht der Comonomere (I)-(III) berechnet sind und zusammen 100% ergeben, enthält.

4. Verfahren zur Herstellung von Latices, die die nach einem der Ansprüche 1 bis 3 hergestellten Polymerisate enthalten, durch Polymerisation der Comonomermischungen bei einer Temperatur im Bereich von 60 bis 100°C in Gegenwart von zusätzlichen Stabilisatoren sowie einem oder mehreren radikalischen Initiatoren und einer oder mehreren Puffersubstanzen.

5. Verfahren nach Anspruch 4, bei dem man die Polymerisation bei einer Temperatur im Bereich von 75 bis 85°C durchführt.

**Revendications**

**Revendications pour les Etats contractants suivants : BE, CH, LI, DE, FR, GB, IT, NL, PT, SE**

1. Polymères que l'on peut obtenir par la polymérisation en émulsion d'un mélange de comonomères de départ, comprenant :

(I) du pivalate de vinyle;
(II) un ester vinylique d'un acide carboxylique aliphatique tertiaire, dans lequel le groupement acide contient 10 atomes de carbone;
(III) de l'acétate de vinyle,
(IV) un monomère stabilisateur, choisi dans le groupe formé par l'acide acrylique, l'acide méthacrylique, l'acrylamide, le méthacrylamide, le diacétoneacrylamide et le vinylsulfonate de sodium et leurs mélanges, par lesquels on préfère tout spécialement l'acide acrylique ou l'acide méthacrylique, en une proportion de 0,5 à 5% en poids, par rapport au poids total des monomères, où les pourcentages pondéraux respectifs des composants (I), (II) et (III), calculés par rapport au poids total de la somme des quantités desdits composants satisfont simultanément les équations qui suivent, décrivant chacune des compositions possédant des lignes de contour de comportement égales dans un diagramme triangulaire :

(i)

$$T_g = 73\, x_1 - 2\, x_2 + 40\, x_3 - 6\, x_1.x_2 - 14\, x_1.x_3$$
$$- 12\, x_2.x_3 + 15\, x_1.x_2.x_3$$

(ii)

$$WA = 9,9\, x_1 + 19,2\, x_2 + 111,2\, x_3 + 12,6\, x_1.x_2$$
$$- 182,6\, x_1.x_3 + 0,4\, x_2.x_3 + 191,1\, x_1.x_2.x_3$$

(iii)

$$WSR = 10\, x_1 + 5\, x_2 - 6\, x_1.x_2 + 20\, x_1.x_3 + 6\, x_2$$
$$.x_3 + 21\, x_1.x_2.x_3$$

où $T_g$ représente la température de transition vitreuse qui possède une valeur variant de 00C à 50°C, où WA représente la valeur ou l'indice d'absorption d'eau, qui est d'au plus 60% m/m, mesurée de la manière spécifiée ci-dessous, où WSR représente l'indice de tachage ou maculage par l'eau, qui est d'au moins 5, après 24 heures et comme spécifié dans la suite du présent mémoire, où $x_1$ représente le pourcentage pondéral du composant (I), $x_2$ représente le pourcentage pondéral du composant (II), possédant au moins une valeur de 0,5% en poids et où $x_3$ représente le pourcentage pondéral du composant (III), possédant une valeur d'au moins 0,5% en poids, les valeurs de $x_1$, $x_2$ et $x_3$ étant calculées sur le poids total des composants (I), (II) et (III).

**2.** Polymères suivant la revendication 1, caractérisés en ce qu'ils proviennent de mélanges de comonomères dans lesquels les fractions pondérales de ces composants (I), (II) et (III) satisfont simultanément les équations (i) à (iii), où $T_g$ possède une valeur qui varie de 10°C à 30°C, WA possède une valeur d'au maximum 50%, WSR a une valeur d'au moins 6 après 24 heures après application dans des films de revêtement et où le composant (IV) est constitué de 1% en poids d'acide acrylique.

**3.** Polymères suivant la revendication 1 ou 2, caractérisés en ce qu'ils proviennent d'un mélange de départ comprenant 14% à 45% de pivalate de vinyle, de 32% à 65% d'ester vinylique d'un acide carboxylique aliphatique tertiaire, dans lequel le groupement acide comporte 10 atomes de carbone et de 2% à 47% d'acétate de vinyle, les pourcentages pondéraux étant calculés par rapport au poids total des comonomères (I)-(III) et les pourcentages respectifs formant ensemble 100%.

**4.** Latex contenant, à titre de constituant polymérique, 30 à 60% en poids d'un polymère suivant l'une quelconque des revendications 1 à 3.

**5.** Compositions de revêtement comprenant un latex suivant la revendication 4 et au moins un pigment.

**6.** Produit polymérique solide formé par le séchage physique d'un latex suivant la revendication 4.

**7.** Procédé de préparation de latex, contenant les polymères suivant l'une quelconque des revendications 1 à 3, par la polymérisation des mélanges de comonomères à une température qui varie de 600C à 1000C, en présence de stabilisateurs supplémentaires, d'un ou plusieurs amorceurs de radicaux et d'agents tampons.

**8.** Procédé suivant la revendication 7, caractérisé en ce que l'on entreprend la polymérisation à une température qui varie de 750C à 85°C.

**Revendications pour l'Etat contractant suivant : ES**

**1.** Polymérisation en émulsion d'un mélange de comonomères de départ, comprenant :

(I) du pivalate de vinyle;
(II) un ester vinylique d'un acide carboxylique aliphatique tertiaire, dans lequel le groupement acide contient 10 atomes de carbone;
(III) de l'acétate de vinyle,
(IV) un monomère stabilisateur, choisi dans le groupe formé par l'acide acrylique, l'acide méthacrylique, l'acrylamide, le méthacrylamide, le diacétoneacrylamide et le vinylsulfonate de sodium et leurs mélanges, par lesquels on préfère tout spécialement l'acide acrylique ou l'acide méthacrylique, en une proportion de 0,5 à 5% en poids, par rapport au poids total des monomères, où les pourcentages pondéraux respectifs des composants (I), (II) et (III), calculés par rapport au poids total de la somme des quantités desdits composants satisfont simultanément les équations qui suivent, décrivant chacune des compositions possédant des lignes de contour de comportement égales dans un diagramme triangulaire :

(i)

$$T_g = 73\, x_1 - 2\, x_2 + 40\, x_3 - 6\, x_1.x_2 - 14\, x_1.x_3$$

$$- 12\, x_2.x_3 + 15\, x_1.x_2.x_3$$

(ii)

$$WA = 9,9\, x_1 + 19,2\, x_2 + 111,2\, x_3 + 12,6\, x_1.x_2$$

$$- 182,6\, x_1.x_3 + 0,4\, x_2.x_3 + 191,1\, x_1.x_2.x_3$$

(iii)

$$WSR = 10\, x_1 + 5\, x_2 - 6\, x_1.x_2 + 20\, x_1.x_3 + 6\, x_2.x_3$$

$$+ 21\, x_1.x_2.x_3$$

où $T_g$ représente la température de transition vitreuse qui possède une valeur variant de 0°C à 50°C, où WA représente la valeur ou l'indice d'absorption d'eau, qui est d'au plus 60% m/m, mesurée de la manière spécifiée ci-dessous, où WSR représente l'indice de tachage ou maculage par l'eau, qui est d'au moins 5, après 24 heures et comme spécifié dans la suite du présent mémoire, où $x_1$ représente le pourcentage pondéral du composant (I), $x_2$ représente le pourcentage pondéral du composant (II), possédant au moins une valeur de 0,5% en poids et où $x_3$ représente le pourcentage pondéral du composant (III), possédant une valeur d'au moins 0,5% en poids, les valeurs de $x_1$, $x_2$ et $x_3$ étant calculées sur le poids total des composants (I), (II) et (III).

**2.** Polymérisation en émulsion suivant la revendication 1, caractérisée en ce que les fractions pondérales de ces composants (I), (II) et (III) satisfont simultanément les équations (i) à (iii), où $T_g$ possède une valeur qui varie de 10°C à 30°C, WA possède une valeur d'au maximum 50%, WSR a une valeur d'au moins 6 après 24 heures après application dans des films de revêtement et où le composant (IV) est constitué de 1% en poids d'acide acrylique.

3. Polymérisation en émulsion suivant la revendication 1 ou 2, caractérisée en ce que le mélange de départ comprend 14% à 45% de pivalate de vinyle, de 32% à 65% d'ester vinylique d'un acide carboxylique aliphatique tertiaire, dans lequel le groupement acide comporte 10 atomes de carbone et de 2% à 47% d'acétate de vinyle, les pourcentages pondéraux étant calculés par rapport au poids total des comonomères (I)-(III) et les pourcentages respectifs formant ensemble 100%.

4. Procédé de préparation de latex, contenant les polymères préparés suivant l'une quelconque des revendications 1 à 3, par la polymérisation des mélanges de comonomères à une température qui varie de 60°C à 100°C, en présence de stabilisateurs supplémentaires, d'un ou plusieurs amorceurs de radicaux et d'agents tampons.

5. Procédé suivant la revendication 4, caractérisé en ce que l'on entreprend la polymérisation à une température qui varie de 75°C à 85°C.

The shaded area represents the
starting comonomer compositions
containing :

VeoVa 5 – VeoVa 10 – Vinyl acetate

FIG. 1

The shaded area represents the
preferred starting comonomer
compositions containing :
VeoVa 5 – VeoVa 10 – Vinyl acetate

FIG.2